# EUROPEAN PATENT APPLICATION

(11) **EP 3 330 883 A1**
(43) Date of publication of application: **06.06.2018**
(21) Application number: 16201505.1
(22) Date of filing: 30.11.2016
(51) Int. Cl.: G06K 7/10, G06K 19/06, G06K 1/12

(54) **PERSONAL DATA STORAGE AND READING SYSTEM**

(71) Applicant: VECO B.V., 5751 EG Deurne (NL)
(72) Inventor: KESSELS, Henricus M.M, 5751 EG Deurne (NL); VELZEL, Christiaan H.F, 5751 EG Deurne (NL)
(74) Representative: LC Patents

(57) **Abstract**

Described is a system for reading and recording personal data and composed of personalized optical cards (1) and a number of read and recording apparatuses (30,40) at selected sites. Mechanical or optical scanning is reduced to a minimum by the following features: data is arranged in rectangular blocks (9) in the optical card (1), data in a block is read out in parallel, each data block (9) includes a cross (25) of optically detectable servo tracks (22, 24), the apparatus is provided with a mechanical actuator (30) for moving a card block (9) to be read or recorded in a read position with respect to an optical read and recording device (40) of the apparatus, the optical device comprises a servo track system (44) for measuring card movements. A central block (10) of the card constitutes the start and end position for each read cycle and recording cycle and comprises information about addresses and contents of other blocks (9).

## Description

### FIELD OF THE INVENTION

The invention relates to a personal data storage and reading system, to a data carrier for use in such system, a read and recording apparatus for such data carrier and to methods for respectively reading and recording data from and to the data carrier.

Described is a system for reading and recording personal data and composed of personalized optical cards (1) and a number of read and recording apparatuses (40) at selected sites. Mechanical or optical scanning is reduced to a minimum by the following features: data is arranged in rectangular blocks (9) in the optical card (1), data in a block is read out in parallel, each data block (9) includes a cross (25) of optically detectable servo tracks (22, 24), the apparatus is provided with a mechanical actuator (30) for moving a card block (9) to be read or recorded in a read position with respect to an optical read and recording device (40) of the apparatus, the optical device comprises a servo track system (44) for measuring card movements. A central block (10) of the card constitutes the start and end position for each read cycle and recording cycle and comprises information about addresses and contents of other blocks (9).

### BACKGROUND TO THE INVENTION

There is an increasing demand for storing private information, such as medical information of a person, or identification information, for example passport or site access information in a safe way and such that this information is accessible at different and remote sites. For instance, medical information recorded at a first site, for example a hospital, should be readable and extendable at another site, for example a physician practice or another hospital.

It is known that private information of a large number of persons can be stored in an electronic database that can be accessed "on line", i.e. via the Internet, by authorized persons. However, it is common knowledge that it is difficult to protect on-line databases; such bases can be hacked so that the stored private information becomes available to third, unauthorized, parties.

Since in an online accessible database information about a large number of persons is stored, such data base is much more attractive for a third, unauthorized, party than a personalized offline data carrier because such carrier contains information of one person only. Such data carrier may be an electronic memory card, also called smart card. A smart card is a flexible plastic card having dimensions similar to those of a credit card with a microchip or integrated circuit chip containing a microprocessor embedded within it. The microchip processor can communicate either by direct electrical contact or by radio waves in the case of a noncontacting smart card. A smart card has a limited storage capacity, of the order of 1Mbyte.

Instead of a smart card, a memory (USB) stick can be used. In such stick many megabytes may be stored. However, for reading a memory stick it has to be connected to a desktop or laptop computer via which the stick can be hacked and the information stolen. Although it is more difficult, also a smart card may be hacked.

For security reasons, it is preferred to use a closed system constituted at the one hand by specific personal data cards, each in possession of a user and at the other hand by dedicated stand-alone devices, which are exclusively suited for reading and recording such cards and which are exclusively located at sites where stored data is to be read and/or new data to be recorded. Such card is an optical card and the device is an optical read-and-write device.

An optical card wherein personal and medical information can be stored is described among others in U.S. Patent 4,544,835. This card is provided with a strip of optically recordable material that can be read out immediately after it has been recorded, a so-called Direct Read After Write (DRAW) material. The strip may have a number of data tracks wherein user's information is written in at stand-alone read-and write stations. For reading and recording the read-and write device is provided with two scanning mirrors.

U.S. Patent 5,241,165 describes an optical card having the same format as the card of U.S. Patent 4,544,835, but the recording material of the strip is an erasable and thus a re-writable material. For scanning the data tracks in the length direction, a cardholder is moved in this direction and for movement of the read / recording spot, the spot forming optical system is moved perpendicularly to said length direction.

Reading data bits from and recording new data bits in known optical cards known from U.S. Patents 4,544,835 and 5,241,165 requires large displacements of the optical card relative to the optical system or of elements of the optical system relative to the card. To allow fast access to the required data on the card or to the required new-recording positions, high and frequent acceleration and retardation of movable elements or of the card are needed, which means that the read and recording device shows a high power consumption. Moreover for the optical system contra-mass is needed, which results in a large mass of the read and recording device. The combination of large displacement velocities and large mass results in such dynamic behavior of the read and recording device that the outer box of this device vibrates during reading and recording.

### SUMMARY OF THE INVENTION

It is an object of the present invention to provide a new concept for a personal data read and recording system using optical cards and optical read and recording apparatuses, which provides a high degree of security, fast access to recorded data, low power consumption and absence of mechanical vibrations of the apparatus. This concept is embodied in a new optical card, a new read and recording apparatus and new methods for reading and recording of the optical card.

A system for reading and recording personal data and composed of a personalized optical card for each participant and a number of read and recording apparatuses at selected sites according to the invention is characterized by the combination of the following features:
- data are arranged in rectangular data blocks on the optical card;
- each data block includes a cross of optically detectable servo tracks;
- data in a block is read out in parallel;
- a read and recording apparatus is provided with a first mechanical actuator for moving a card block to be read or recorded in a read out position with respect to an optical read and recording device of the apparatus;
- the optical read and recording device comprises a servo track detection system for measuring card movements;
- data is recorded bit by bit by means of a linearly moving and intensity switchable recording spot and a second mechanical actuator for moving the card over distances of the order of a data bit size in a direction perpendicular to the recording spot movement.

A cross of servo tracks is understood to mean two mutually perpendicular servo tracks. The center of the cross preferably coincides with the center of the data block. The feature: "data in a block is read out in parallel" is understood to mean that the entire data structure of a block situated in the read out position is projected simultaneously on a pixellated radiation-sensitive detector and is electronically scanned, so that for reading this data block optical or mechanical scanning is no longer needed. The term "pixellated" is understood to mean: divided in detector, or picture elements (pixels). The first mechanical actuator may be called coarse actuator and comprise for example an X- and Y-slide. The second actuator for fine movement in one direction only, may be called fine actuator. The actuator may be configured such that the coarse and fine movement in the said one direction is performed by one slide. Alternatively, the actuator may comprise a second slide for this direction.

The system for reading and recording personal data is preferably further characterized in that it is configured to have a home position in the form of a central data block in the optical card, which block constitutes the start position and the end position for each read cycle and each recording cycle.

An optical card for use in the new system and for carrying personal data, which card has a length direction and a width direction and an information layer that is divided in data portions according to the present invention is characterized in that the data portions are blocks spaced from each other in the length direction and width direction of the card, which blocks are sub-divided in a number of sub-blocks, which are simultaneously accessible and in that a central block in the center of the card is a navigation block that comprises information about addresses of the other blocks and about contents of other blocks that are already recorded with user data.

Data portions are understood to mean both portions of the card that are already furnished with user data or portions that can be provided with user data.

Since data belonging together, for example from one medical examination is now stored in one data block, for example one sub-block, having a small surface area, it becomes possible to read these data without mechanical or optical scanning. Such sub-block, which may also be called page, can be imaged as a whole on a pixellated radiation-sensitive detector such as a CCD (charge coupled device). For reading certain user data from the new card, only once a larger movement of the card is needed, namely for positioning the central block on the optical axis of the apparatus and subsequently for positioning the block containing the required page on this optical axis.. Thus forth and back scanning over distances of the order of the card dimensions is no longer needed, and the above mentioned disadvantages inherent to the known optical cards are avoided.

In order to assure that the user personal data on the card can be accessed only in the presence of the user and with his permission, the card is further characterized in that the navigation block is provided with user identification data.

The central block thus has two functions. It is a guidance, or navigation-, block for guiding to the page and block containing the required data. And it is a security means that prevents any read or recording action without consent of the user in question.

Before each read and/or recording cycle, identification data that is furnished by the user is compared with the identification data stored in the navigation block and only when these identification data are identical access to personal data is allowed.

The user identification data may be pre-recorded in the navigation block, for example by the card manufacturer, or be recorded at the start of the first use of the card in a read and recording apparatus.

The optical card according to the invention is preferably further characterized in that between the sub-blocks within a block optically detectable servo tracks are arranged.

These servo tracks, which extend in two mutually perpendicular directions, allow proper positioning of the center of a data block relative to the optical read and recording device during reading and recording.

Preferably the optical card is further characterized in that the information layer is covered with a transparent protective layer.

This layer, which is for example 0,5 mm thick prevents mechanical damage of the information layer and keeps dust and dirt particles out of focus during reading or recording by providing sufficient distance between these particles and the information layer.

The apparatus for use in the new system and comprising a card holder and an optical read and recording device, is characterized in that it comprises a mechanical actuator for moving the card holder in two, mutually perpendicular, directions to position a data block in the field of an entrance objective lens of the optical read and recording device and to align the center of the data block with the optical axis of the entrance objective lens.

The term objective lens or lens in general is used in this specification in a general sense; such lens may comprise two or more lens elements or one aspherical lens element, for example. The entrance objective lens should concentrate the radiation of the read beam or write beam in an illumination area and a small spot, respectively on the optical card. The term data block includes both a block already filled or partly filled with user data, a block that still can be provided with user data and also the central data block mentioned herein before.

The capability of the mechanical actuator for the card holder is used to the optimum in an apparatus that is characterized in that the mechanical actuator is configured to displace the optical card during recording over small distances in one of the two card directions. The small displacements may be realized by a separate fine actuator element. It is also possible to configure the actuator such that it can perform both the coarse and fine displacements in the fine-displacement direction.

During recording of user data a recording spot should be scanned in two directions relative to the optical card. Scanning in one direction is now performed by a stepwise movement of the card relative to the recording spot. In this way, the recording beam from the read and recording device needs to scan in only one direction, which means a simplification of this device

An apparatus that is optimized to perform the several functions is characterized in that its optical read and recording device comprises three branches, hereinafter also referred to as modules, having a common optical axis and entrance objective lens facing the optical card, the branches including:
- a reading branch for reading data,
- a servo branch for determining alignment of a data block of the card with the common optical axis and focus of the common objective lens relative to the card information layer and
- a recording branch for recording data.

The apparatus is further characterized in that the reading branch includes an objective lens in addition and identical to the entrance objective lens, a read radiation source delivering a read beam and a pixellated radiation-sensitive detector.

The two objective lenses preferably perform a 1:1 imaging of the illuminated area of the card information layer on the detector. Such a symmetric lens system is in principle distortion-free.

The apparatus may be further characterized in that the servo branch includes a servo radiation source delivering a servo beam and a two-dimensional grating structure to generate a number of alignment spots on mutually perpendicular servo tracks within a data block.

By means of the images of these spots on a radiation-sensitive detector the orientation of the servo tracks of the relevant data block with respect to the detector structure can be determined.

The apparatus is preferably further characterized in that the servo branch includes an astigmatic focus detection system.

An astigmatic focus detection system comprises a so-called four quadrant detector and an element, for example a cylindrical lens, that renders a focus detection beam astigmatic. This means that the shape of the spot formed on the detector is dependent on the degree of focus and may change from circular (in focus) to elliptical (out of focus). Such focus detection system is known per se, e.g. from the art of optical disc (CD or DVD) recording.

The apparatus is, according to another aspect, characterized in that the recording branch includes a laser source delivering a recording laser beam which power is switchable at data recording rate and a rotatable reflector to scan the recording beam in one direction over the optical card.

This direction may be the length direction of the card. By rotating said reflector, for example a plane mirror or a prism mirror, a recording spot is scanned along a line in the page or block to be written. After this line has been recorded, the fine actuator of the cardholder moves the card over a small distance, in a direction perpendicular to the line, so that a next line can be recorded.

The invention also relates to a method for reading and a method for recording the new optical card using the new read and recording apparatus. These methods are composed of a sub-method, which is common for reading and recording and a specific read and specific recording sub-method, respectively.

The common sub-method is a method of manipulating an optical card such that it is ready for reading or recording in a read and recording apparatus and comprising the steps of:
- arranging the card in a cardholder of the apparatus;
- directing a beam of optical radiation at the card;
- capturing optical radiation from the card on a radiation-sensitive detector.

This sub-method according to the invention is characterized by the successive steps of:
- positioning the central block of the card in the field of the entrance objective lens of the read and recording device by means of cardholder movement;
- activating the reading branch and the servo branch;
- aligning the center and the central cross of the central block with the center and the orientation of the radiation sensitive detector, respectively;
- determining the coordinates of the sub-block to be read or recorded;
- positioning the block containing this sub-block in the field of the entrance objective lens by means of cardholder movement.

The central cross of a block is understood to mean the cross that is formed by the intersecting servo tracks within the relevant block.

The method of reading data from an optical card comprising the common sub-method is characterized by the additional steps of:
- aligning the center and the central cross of the block containing the sub-block to be read with the center and orientation of the radiation sensitive detector, respectively;
- reading data of the sub-block by illuminating the sub-block and interrogating the portion of the detector on which the sub-block is imaged, and
- re-positioning the central block back in the field of the read objective after the required data have been read.

The method of recording data in an optical card, comprising the common sub-method is characterized by the additional steps of:
- aligning the center and the central cross of the respective block with the center and the orientation of the radiation sensitive detector;
- recording data bits along a scan line and shift the card, either in steps or continuously, in a direction perpendicular to the scan line,
- checking, by means of the reading branch, the recorded data after they have been recorded and
- re-positioning the central block in the field of the entrance objective lens and storing the address and content of the sub-block just recorded in the central block.

### BRIEF DESCRIPTION OF THE DRAWINGS

With specific reference now to the figures, it is stressed that the particulars shown are by way of example and for purposes of illustrative discussion of the different embodiments of the present invention only. They are presented in the cause of providing what is believed to be the most useful and readily description of the principles and conceptual aspects of the invention. In this regard no attempt is made to show structural details of the invention in more detail than is necessary for a fundamental understanding of the invention. The description taken with the drawings making apparent to those skilled in the art how the several forms of the invention may be embodied in practice.

In the drawings:
Fig.1 shows a front view of an embodiment of the optical card according to the invention;
Fig. 2 shows a cross-section of this card;
Fig. 3 shows the configuration of one data block of this card;
Fig. 4 shows a block diagram of the read and recording apparatus according to the invention;
Fig. 5 shows a top view of an embodiment of the mechanical positioning module of this apparatus;
Fig. 6 shows a cross-section of the optical device and the driver for the cardholder including an optical card;
Fig. 7 shows a diagram of an embodiment of the read branch of the optical device;
Fig. 8 shows a diagram of an embodiment of the servo branch of the optical device;
Fig. 9 shows a data block with servo radiation spots generated by the servo branch;
Fig. 10 shows a composed radiation-sensitive detector suited for cooperation with this spot arrangement;
Fig. 11 shows a detector arrangement and an electronic processing circuit for obtaining a focus error signal;
Fig. 12 shows a diagram of an embodiment of the recording branch of the optical device;
Fig. 13 shows the optical elements of an embodiment of the assembled optical device, and
Fig.14 shows a second embodiment of this device.

In the drawings identical elements are labeled with the same reference numbers.

### DETAILED DESCRIPTION OF THE INVENTION

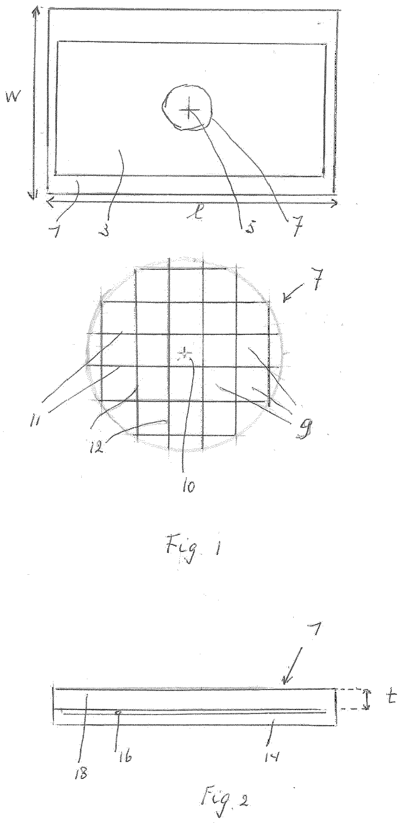

Fig. 1 shows a top-view of an embodiment of a personal optical card (1) according to the invention. This card may have a length I = 85 mm and a width w = 54 mm, similar to a credit card. The card comprises an information, or data-, strip (3), which is provided with an information layer of an optical type. The center of the data strip is marked with reference number (5). A circular portion (7) around this center is shown on enlarged scale in the lower part of Fig.1. Data strip (3) is divided into a number of data blocks (9), which are arranged in rows and columns extending in the length direction and the width direction, respectively of the card. Lanes (11) and (12) extending in the length direction and width direction respectively separates the data blocks from each other. Central block (10) has a special reference number, because its function is different from the other data blocks, as will be explained hereinafter.

Fig. 2 shows a cross-section of optical card of Fig.1. The card comprises a substrate (14) and an information, or data-, layer (16), which is the layer of strip (3) in Fig. 1. The substrate is only a carrier so that no specific requirements are to be set to its material. This may be a hard plastic. The material of data layer (16) may be a direct-read-after write (DRAW) recording material, preferably having a low melting point. This material may be of a reflective type. At locations where data bits are written in the material becomes absorbent so that a data bit structure is a black-and-white structure, i.e. an amplitude structure. It is also possible to use an absorbent data layer and to interpose a reflective layer between the substrate and the data layer. In that case the data layer becomes transparent at locations where data are written in.

As shown in Fig. 2 data strip (3) is covered with a transparent protective layer (18) of, for example the well-known optical material polycarbonate (PC). Such a layer does not only provide mechanical protection for the data layer, but also keeps dirt and dust particles at sufficient distance from the data layer so that they cannot obstruct data reading and recording. To that end protective layer (18) should have a minimum thickness t that is dependent of the numerical aperture (NA) of the common, or entrance, objective lens of the optical device. For example, for an objective lens having an NA = 0,2, t = 0,5 mm

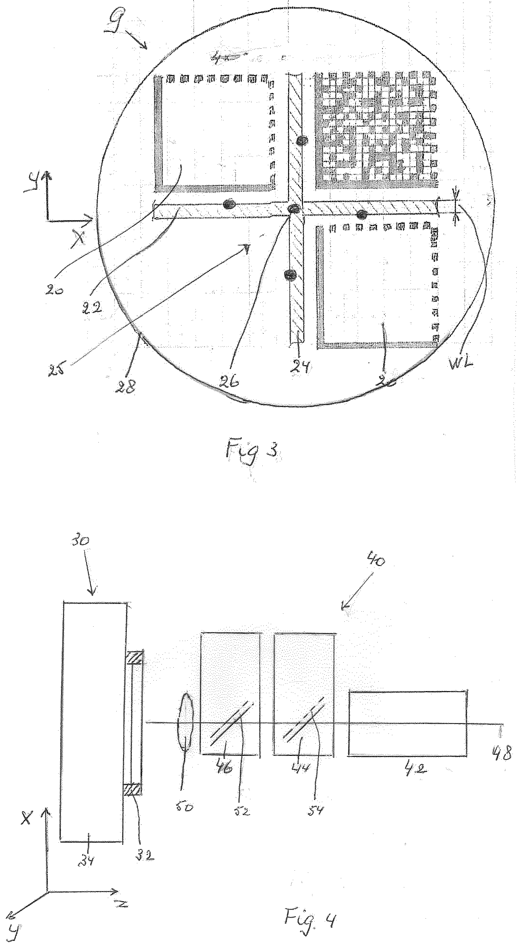

Fig. 3 illustrates that each of the data blocks (9) shown in Fig. 1 includes four sub-blocks or data pages (20), one of which is not shown for clearness sake. The sub-blocks (20) are empty or already filled with data or partly filled. Between the sub-blocks servo tracks (22) extending in the X-direction, which may be the length direction of the card, and servo tracks (24) extending in the Y-direction, which may be the width direction of the card, are present. Servo tracks (22) and (24) can be optically detected because they have a reflection that is different from their neighborhood, i.e. lanes (11) and (12) of Fig.1. The servo tracks form a cross (25), the center (26) of which is aligned with the axis of an entrance objective lens before reading and recording is performed, as will be described later. The servo tracks have a width WL = 10 µm, for example.

For example, data pages (20) have a size of 1,325 x 1,325 mm2 and contain 265 data rows and 265 data columns. This means that a data bit has a size of 5 x 5 µm2 and that one page may contain 70.255 data bits. In a card width a size of 85mm x 54 mm 406 blocks can be arranged in a data strip of 80mm x 40 mm. In this example the optical card has a data capacity of 13,3 Mbytes, which is comparable with a book of 600 pages. Generally speaking , the data capacity of an optical card according to the invention may vary between 10 and 20 Mbytes. It will be clear that the structure shown in the upper right part of Fig. 3, wherein data bits are represented by small squares, is pure illustrative; in reality the squares are much smaller and their number much larger than shown.

Fig. 4 shows in a block diagram the principle of the read and recording apparatus of the invention. This apparatus comprises a mechanical device (30) for clamping and moving the optical card (1) and an optical read and recording device (40). The mechanical device includes a cardholder (32) and a composed positioning module (34) for moving the cardholder. The mechanical device includes a first, relatively coarse, positioning module for moving the card in its own plane in the X-direction and in the Y-direction at a relatively low speed, for example Vx and Vy are of the order of 0,1 m/sec and with relatively low accuracy, for example Δx and Δy are of the order of 0.1 mm. The first positioning module is used to bring a block, of which a page, or sub-block, is to be read or recorded in the field of view of a common, or entrance, objective lens (50).

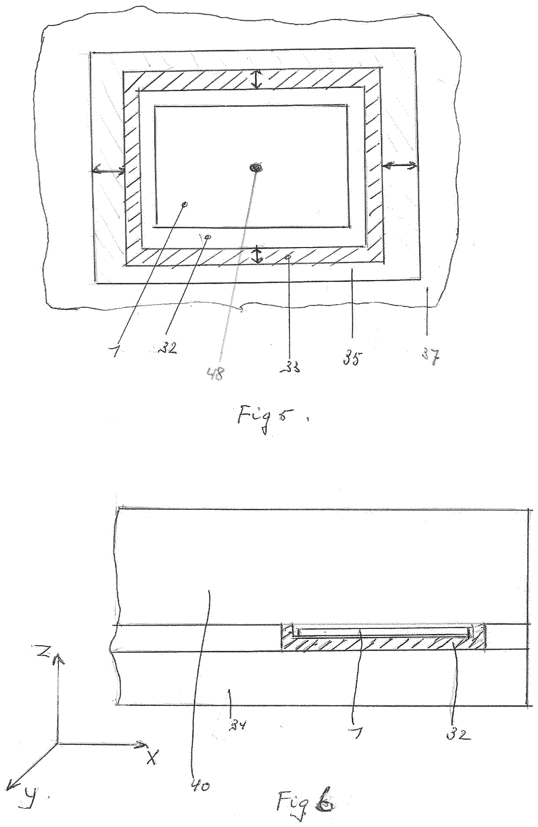

A top view, i.e. a view in the -Z direction of Fig. 4 of the positioning module (34) is shown in Fig. 5. This module comprises a frame (37) for carrying a first, or X-, slide (35) for moving card (1) in the X direction, for example the length direction of the card. For moving the card in the Y direction a second, or Y-, slide (33) is present that may be superposed on the X slide. The Y slide carries the cardholder (32). Fig. 5 also shows optical axis (48) of the read and recording device in the center of card (1), which means that central data block (10) is in the field of a common entrance objective lens (50).

The mechanical device 30 also includes a second, relatively fine, X and Y positioning module for moving the card holder over small distances, for instance smaller than 3 mm. with a high accuracy. Fine movement of the card holder can be realized by means of separate slides. It is however preferred to configure module (34) such that a slide can perform both a coarse movement and a fine movement. In that case different control signals are supplied to a slide, a coarse control signal for the coarse movement and a fine control signal for the fine movement. Module (34) can also configured such that it can realize a small rotation of the card holder around the Z-axis, i.e. an axis perpendicular to plane of the card, over about plus and minus two degrees with an accuracy of for example 0,5 mill radians. The elements for realizing these small movements are controlled by optical detectors of the servo branch of the optical device. These elements and the associated optical detectors together thus form servo systems.

Mechanical module (34) may furthermore include a driver for moving the card holder in the Z-direction over a maximum distance of for example 0,1 mm. This actuator is controlled by a focus detection system in the servo branch of the optical device and thus forms part of focus servo system that may have an accuracy of for example of plus and minus 1 µm. Although already here reference is made to the servo branch of the optical device, this branch will be described later on.

During process stages wherein the coarse positioning elements are active, the fine positioning elements are inactive, i.e. set on standby.

As shown in Fig. 4, the optical read and recording device (40) of the apparatus according to the invention comprises three modules, namely reading module (42), recording module (46) and servo module (44). The exit and entrance axes of these modules to and from the reflective card are aligned with a common axis (48) by means of beam combining elements (52) and (54). Axis (48) is also the axis of a common entrance objective lens (50). Since the three modules form part of one optical system these modules can be called branches.

Fig. 6 shows, in cross-section, a diagram of the read and recording apparatus wherein an optical card (1) has been inserted. This figure illustrates the mutual position of the mechanical positioning device 34 and the optical device (40).

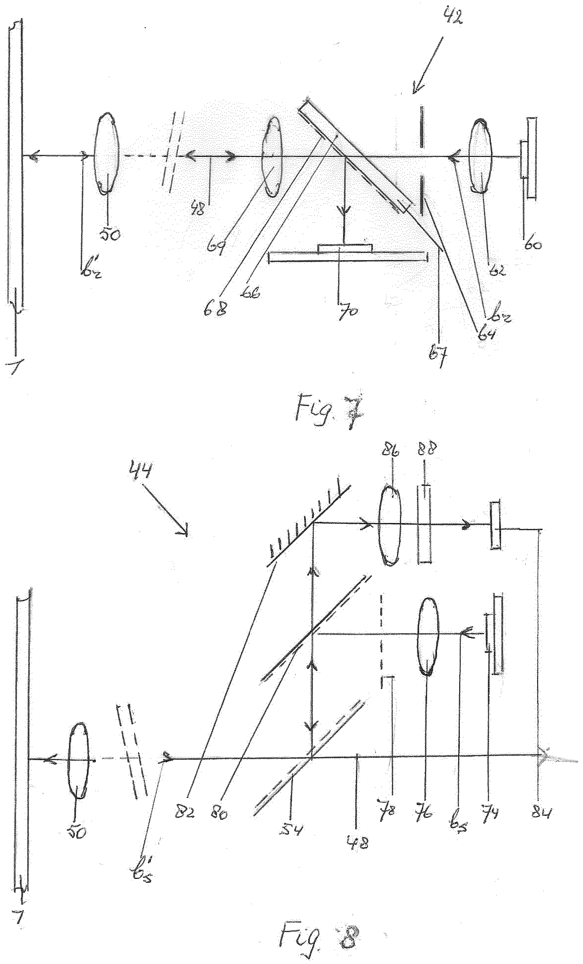

Fig. 7 shows an embodiment of the reading branch (42). This branch includes a first radiation source (60), for instance a light-emitting diode (LED). This source emits a read beam br having a wavelength of, for example, 650 nm. This beam should illuminate a surface area of the card's data layer, which area has a size approximately equal to that of a data block of the optical card (1). The illuminated area is indicated in fig. 3 by circle (28). To define the illuminated area the optical path of the reading branch comprises a condenser lens (62), a field diaphragm (64) and an objective lens (69). This lens is in a symmetric arrangement with, and has the same lens power as, entrance objective lens (50). The lens system consisting of lenses (50) and (69) thus has the same lens power for a beam towards card (1) and a beam reflected by the card. Although for clearness sake otherwise shown, in reality the distance between optical card (1) and objective lens (50) is equal to the distance between lens (69) and radiation-sensitive detector (70). Also the distance between lens (69) and diaphragm (64) is equal to these distances. Field diaphragm (64) is optically conjugate with the information layer of the optical card (1) and ensures that reading beam br illuminates only the required surface area of the card's data layer. The reflected reading beam br' passes objective lenses (50) and (69) and is separated from the beam br by a beam splitter (66), which reflects part of beam br' towards radiation-sensitive detector (70). This detector is a so-called pixellated detector, which means that it comprises a two-dimensional array of detector elements and allows point wise reading of an incident radiation pattern. The detector is preferably a CCD detector or a C-MOS detector. The two equal objective lenses (50) and (69) in symmetric arrangement image an illuminated data bloc on the detector (70). Since a data block is imaged on detector (70) and this image is scanned electronically, for reading a data page no movement of the optical card is needed. The reading system reads a complete block in parallel, which means for the above given example that 25x4x265x265 = 7 Mbit/sec. are taken in. Selection of a specific data block is performed by positioning module (34) in a feed-forward mode.

Different types of beam splitters are known. Preferably beam splitter (66) is a transparent plane parallel plate (67) covered with a partially, for example 50%, reflective layer (68). Since the partially reflective layer of the this beam splitter has a flat front side it does not introduce aberrations in the data block image formed on detector (70). Moreover, ghost images due to false reflections at the backside of the plate will be formed outside the radiation sensitive plane of detector (70).

Fig. 8 shows the elements of the servo branch (44) of the optical read and recording device. This branch comprises a second radiation source (74), for example a diode laser or a LED, which emits a servo beam bs at a wavelength of for example 650 nm. A collimator lens ((76)) converges the divergent servo beam into a collimated beam. Beam splitter (80) reflects part of the collimated beam towards beam splitter (54), already shown in Fig. 4. This beam splitter reflects part of the incident servo beam bs towards the optical card (1), whereby this beam passes objective lens (50), already shown in Figs. 4 and 6. The collimator lens (76) together with the objective lens ensure that radiation source (74) is imaged into a small spot on the data layer of the optical card (1). Servo beam radiation reflected from this information layer and passing again objective lens (50) forms a reflected servo beam bs'. Beam splitter (54) reflects part of this beam towards beam splitter (80), which passes the beam towards a folding reflector (82), for reflecting the beam towards a composed radiation-sensitive detector (84).

Between reflector (82) and detector (84) an objective lens (86) is arranged that, together with common objective lens (50), ensure that an illuminated spot on the information layer of the card is imaged as a spot on the detector.

If somewhere in the optical system more reflected light, for example towards a detector is required, a partially reflective beam splitter can be replaced by a polarization sensitive beam splitter (PSB) and a quarter wavelength plate in front of the PSB.

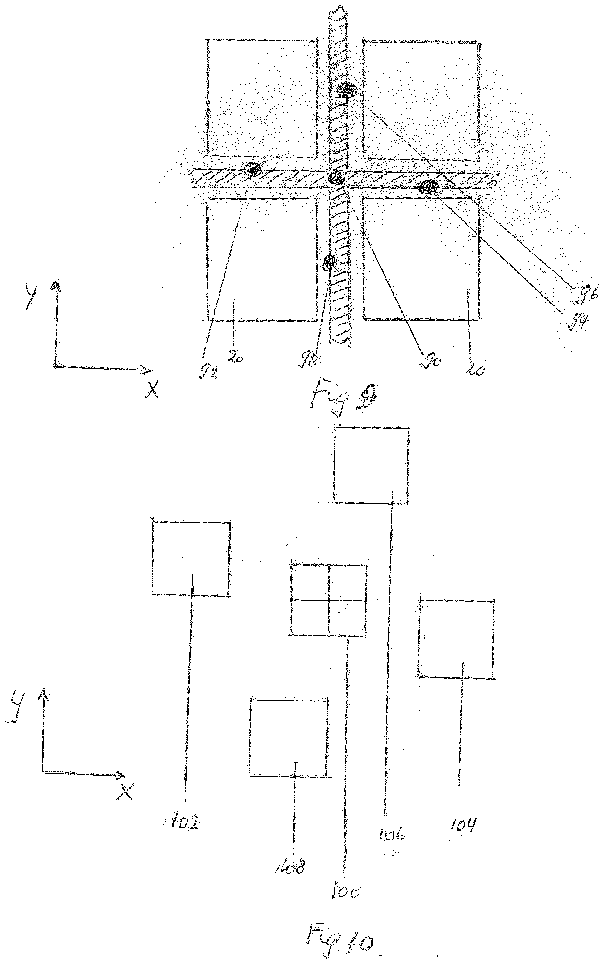

In order to detect deviations between the orientation of the servo cross (25) (Fig.3) and thus that of a data block and the orientation of the two-dimensional structure of the pixellated detector (70) (Fig. 7), a two-dimensional grating (78) is arranged in the servo branch between collimator lens (76) and beam splitter (80). Such grating diffracts incident radiation into a number of diffraction orders. The structure of such a grating, for example in case of a phase grating the width and depth of the grating lines, can be adapted such that most of the radiation is concentrated in the zero order and first diffraction orders. Fig. 9 shows five spots which are formed, on the data layer of the optical card by means of diffraction grating (78). The central spot (90) is formed by non-diffracted radiation, spots (92) and (94) are formed by radiation diffracted in the +1 and -1 diffraction orders in the X-direction an spots (96) and (98) are formed by radiation diffracted in the +1 and -1 orders in the Y-direction. The orientation of the grating lines of grating (78) is chosen such that spots (92) and (94) are mutually shifted in the Y-direction over the width of a servo track and spots (96) and (98) are mutually shifted in the X-direction over this width. When the orientation of the servo cross (25) corresponds with that of detector (70), the centers of spots (92), (94), (96) and (98) are positioned at a border of the associated servo track, as shown in Fig. 9.

The radiation of the five spots reflected by the information layer of the card should be detected by separate detector elements. Fig. 10 shows a top view of the composed detector (84) of the servo branch. This detector comprises five sub-detectors, a central sub-detector 100 for the central spot (90) and sub-detectors (102), (104), (106) and (108) for spots (92), (94), (96) and (98) respectively. By comparing the output signals of sub-detectors (102) and (104) alignment in the x-direction can be determined; X orientation of cross (25) is correct when these output signals are equal. In the same way the Y-orientation can be determined by comparing the output signals of sub-detectors (106) and (108). The difference signal of sub-detectors (102) and (104) and the difference signal of sub-detectors (106) and (108) are supplied to the above-mentioned fine positioning elements for rotating the cardholder about the Z-axis. These elements, which form part of mechanical positioning module (34) (Figs. 4 and 5), allow correction of the orientation of the servo cross (25). For a proper detection of the spot intensities on the sub-detectors shown in Fig. 9, the size of these detectors are adapted to the size of an incident spot. The detector size is larger, for example two times larger than the spot size

The use of servo- or tracking spots at both sides of a main spot for the purpose of keeping the main spot on track during scanning of the track by the main spot is known from the technique of optical recording. Such a three-spot reading system for an optical disc is described for instance in U.S. Patent 3,8(76),(84)2.

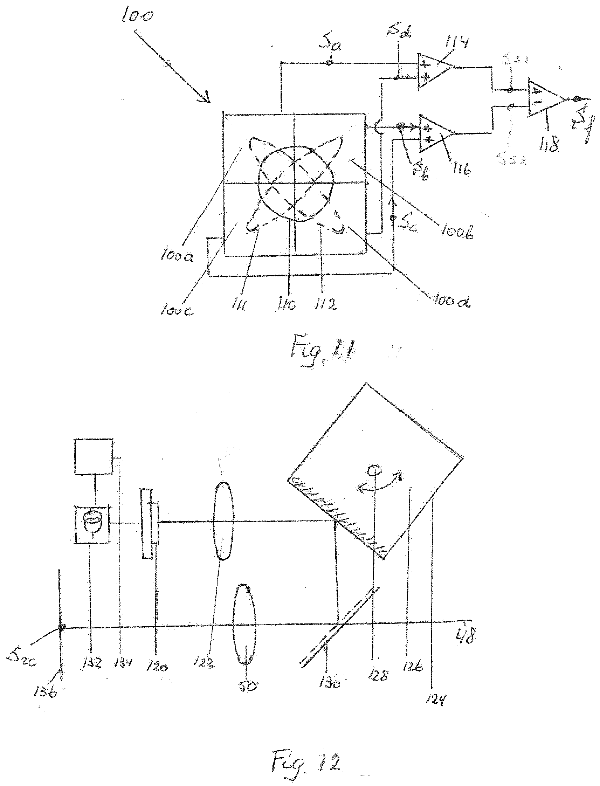

The servo branch includes also a focus detection system to determine whether the data layer is in the focal plane of entrance objective lens (50). The focus detection system includes a so-called astigmatic element (88), for example a cylindrical lens arranged between objective lens (86) and composed detector (84), more specifically sub-detector (100) of Fig 10, which detector is a so-called four quadrant detector. The latter is constituted by four separate detector elements 100a, 100b, 100c and 100d in which the central sub-detector (100) is divided as shown in Fig. 11. Cylindrical lens effects that the radiation beam bs' after passage of this lens no longer has one focus point that is determined by objective lens (86), but has two mutually perpendicular focal lines. The spot formed on the four-quadrant detector (100) has a shape that may vary between round and elliptical as indicated in Fig. 11 by reference numerals (110), (111) and (112). If the information layer is in focus the spot on detector (100) is round, as indicated by reference numeral (110). The more out of focus the information plane, the more the spot becomes elliptical, as indicated by reference numerals (111) and (112). The direction of the long axis of the ellipse is determined by the "sign" of defocus, i.e. whether the information plane is before or after the focal plane of objective lens (50).

Fig.11 also shows how a focus-error signal can be obtained. A first sum amplifier (114) ads the output signals Sa and Sd of detector elements 100a and 100d and a second sum amplifier (116) ads the output signals Sb and Sc of detector elements 100b and 100d. A difference amplifier (118) subtracts the sum signals Ss1 and Ss2 from each other whereby the focus error signal Sf is obtained. If the information plane of the optical card is in focus, the four detector elements receive equal amounts of radiation and signal Sf is zero. If the data plane is too close to the objective lens (50) two of the detector elements, for example Sa and Sd, receive more radiation than the other two elements and signal Sf has a positive value. When the data plane is too far from objective lens (50), the reverse takes place and signal Sf has a negative value. The signal Sf is supplied to the fine movement elements of the mechanical positioning module (34) in order to move the cardholder in the Z-direction. The range of this movement is for example 0,1 mm. and its accuracy for example 1 µm.

The astigmatic focus error detection method is known from the field of optical disc recording and described in, for example U.S Patent 4,011,400.

Cross-talk between focus errors and tracking errors, i.e. deviations between the orientation of the servo cross (25) and the orientation of the pixellated detector (70) does not occur since detectors (102), (104), (106) and (108) have such size that they can not detect a variation of the shape of the incident radiation spots.

Instead of the preferred astigmatic focus error detection, other focus detection systems can be used. For example, the contrast in the image formed on detector (70) can be used to determine a focus error, in a way similar to that used in present day consumer camera's.

Fig. 12 shows an embodiment of the recording branch of the optical read and recording device. This branch comprises a power-controlled radiation source (120), for example a diode laser that emits a recording beam of radiation brc, having a wavelength of for example 890 nm. This beam is incident on a reflecting element (124) that reflects the beam towards a wavelength-selective reflector (130). The latter sends the recording beam brc towards the common entrance objective 50, whereby this beam becomes co-axial with the common optical axis (48) of the optical device. As such, the reflector (130) is a beam-combining element that unifies the last portions of the radiation paths of the read beam br, the servo beams bs and the recording beam brc. Between radiation source (120) and reflector (124), a collimator lens (122) is arranged. The combination of this lens and common objective 50 images radiation source (120) into a small recording spot Src in the data plane of the optical card. In case a data bit cell on the information plane has a size of 5x5 µm2 the recording spot has a diameter smaller than 5 µm, for example 3 µm.

Reflecting element (124) is preferably a mirror prism and consists of a body (125) that is rotated during recording around axis (128) and has for example four reflecting side faces (125). Element (124) could also be a rotating mirror. The advantage of a mirror prism is that the "dead time" , i.e. the time that no effective scanning takes place, is minimized. Beam combining element (130) is a transparent body, for example a plane parallel plate, provided with a so-called dichroic coating, or wavelength-selective coating. This coating shows a high reflectance R for the recording beam brc, for instance R is larger than 95% for the wavelength range of 700-1000 nm and a high transmittance T for the read beam br and the servo beams bs, for instance T is larger than 95% for the wavelength range of 400-(69)0 nm.

For recording the Radiation Source (120), preferably consisting of a data bits diode laser, is modulated by means of a modulator (134) that modulates current source (132), which controls the diode laser, such that the diode laser emits a train of radiation pulses in accordance with the data to be recorded. Simultaneously mirror prism 124 is rotated such that recording spot Src scans a line (136), for instance extending in the X-direction, in the data plane of the optical card and data bits are recorded at successive locations along line (64). The mirror prism can be rotated continuously, or in steps. After one line (136) has been recorded the card holder is moved in the direction perpendicular to this line, for instance the Y-direction over a small distance, in this embodiment over 5 µm by means of the fine positioning elements of the mechanical positioning modules 34. Instead of stepwise movement in the Y-direction is also possible to move continuously in this direction during scanning of line (136). The movements in the X-direction and in the Y-direction are coordinated such that data bits are positioned with an accuracy of ±1 µm in both directions in the recording layer.

The wavelength of diode laser 120 and the material of the recording layer are adapted to each other. The wavelength is for example 890 nm and the recording material is preferably a DRAW material with a relatively low melting point. Examples of such material are disclosed in U.S. Patent 4,544,835 cited herein above in the Background paragraph. The recording material is preferably reflective. The recorded data bits are then absorptive.

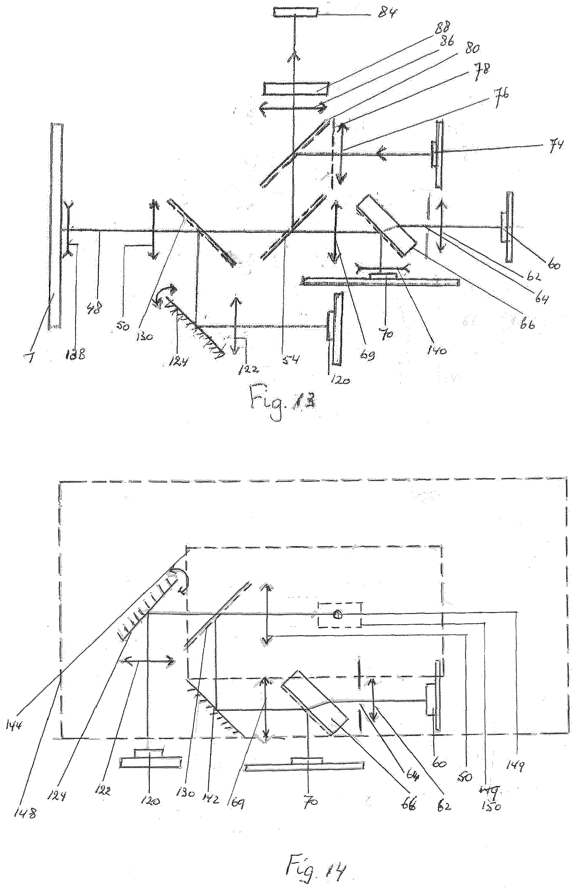

For a proper understanding, Fig. 13 shows an embodiment of how the three branches are integrated in one optical device. Elements (60), (62), (64), (66), and (69) are part of the reading branch. Elements (74), (76), (78), (80), (84), (86) and (88) belong to the servo branch. Beam combining element 54 is part of both the reading branch and the servo branch. Elements 120, (122), 124 are part of the recording branch. The combining element (130), the dichroic beam-splitter and objective lens (50) are arranged in optical path portion (48) that is shared by the three branches and thus these elements are common to the three branches. In addition to the cited elements, the optical device of Fig. 13 comprises a first negative lens (138), arranged between entrance objective lens (50) and optical card (1), and a second negative lens (140), arranged between beam splitter (66) and detector (70). Lenses (138) and (140) are so-called field flattening lenses and serve to correct for the field curvature of objective lens (50) and objective lens (69), respectively. In order not to overburden Fig. 13, all lenses are represented by lines, which in case of positive lenses, like entrance objective lens (50) have arrowhead ends and in case of negative lenses have forked ends.

Under circumstances, if smaller displacement velocities and lower reading rates are used, the optical read and recording device can be considerably simplified by using the pixellated detector (70) also for detecting errors in the orientation of the servo cross (25) (Fig. 3) relative to the orientation of the pixel structure of the detector (70). Then a servo branch, such as 44 in Figs. 4 and 7 is no longer needed. For focus detection image- analysis and processing such as known from current-days optical camera's, such as consumer cameras may then be used. Current images sensors, like CCD or CMOS sensors allow such second use of the detector. For example, military tracking systems are known and used wherein fast moving targets at large distances are followed, or tracked, with angle accuracies of the order of 1 µradian. The method used there can, with adaptation to the small distance between the optical card and the read device, be used for determining orientation errors by the CCD detector (70). For example use can be made thereby of a so-called binning method, wherein a number of pixels of the pixelated detector are read as one pixel. For recording no binning is applied and slower movements should be used.

Fig. 14 shows an embodiment of an optical read-and recording device wherein pixellated detector (70) is used for determining relative orientation of a data block and the pixel structure of the detector and wherein no separate servo branch is present. The Figure shows elements (60), (62), (64), (66) and (69) of the read branch and elements 120, (122), 124 and 130 of the recording branch. Because the mutual position of the read branch and the recording branch is different from that of the preceding embodiment a reflecting element (142), also called folding mirror, is added to reflect the read beam towards dichroic mirror 130. In this embodiment the common optical axis (48) is folded at point (149) in a direction, the Z-direction, perpendicular to the plane of drawing of Fig. 14 by a reflector at 45o to the plane of drawing. This reflector is schematically represented by interrupted lines element (150). The read beam and the recording beam are thus directed perpendicular to the plane of drawing, either towards the viewer or away from the viewer. The memory card is now positioned parallel to the plane of drawing, the X-Y plane, and either in front of or behind this plane. The projection of data strip (3) (Fig.1) of this card in the plane of drawing of Fig. 14 is indicated by broken lines (144). The coarse positioning elements of the electromechanical positioning module 30 (Fig. 1) will move the data strip within a field indicated by broken boundary lines (148). Knowing the size of data strip 144, the size of the broken boundary line field (148) gives an impression of the length and width of the read and recording apparatus.

To indicate that heating within the enclosure of the apparatus, represented by boundary lines (148) should be avoided detector array (70) with its printed circuit board and recording laser 120 are shown in Fig.14 as arranged outside the enclosure (148). However, diode laser 120 can be arranged within the enclosure by using a folding mirror (not shown in Fig. 14) between this laser and objective lens (122). And the pixellated detector (70) can be arranged within the enclosure by a 90 degrees rotation of beam splitter (66) around the optical axis (48) at its location.

An important aspect of the present invention is the method of reading previously recorded and pre-recorded data from, and of recording new data in the optical card. Previously recorded data is understood to mean card owner related data that has been recorded in a previous recording stage, for example during a previous visit at a hospital. Pre-recorded data is understood to mean general, not specific card owner data that was recorded at a central place, for example by the card manufacturer. Pre-recorded data is, for example, present in the central data block of the card. The new method is distinguished from the prior art by the way use is made of the central data block when reading and recording. The method for reading and the method for recording have a number of steps in common and these steps together can be labeled as a common sub-method. The common sub-method is a method of manipulating an optical card such that it is ready for reading or recording in a read and recording apparatus and comprises the following steps:
First the optical card is arranged and clamped in the cardholder of the apparatus on a cylindrical surface of this holder, whereby the surface curvature is perpendicular to the above-mentioned scanning direction (line (136) in Fig. 12). Use of the cylindrical surface provides the advantage that the orientation of the card is automatically fixed and remains fixed. Then the read branch and the servo branch of the optical device are activated so that the data layer of the card is illuminated and focus detection is performed. Next the center, i.e. the central block of the card, which may be called home position, is moved in the field of the entrance objective lens of the read and recording device by means of cardholder movement. Then the center and servo cross of the central block is aligned with the center and the orientation of the radiation sensitive detector, respectively. From control pages of the central block the coordinates of the sub-block to be read or recorded are then determined. Finally the block containing this sub-block is positioned in the field of the entrance objective lens by means of the electromechanical positioning device.

For reading data from the optical card the following additional steps are performed. The center and servo central cross of the data block containing the sub-block to be read is aligned with the center and orientation of the pixellated radiation sensitive detector, respectively. The data of the sub-block is read by illuminating the sub-block and interrogating the portion of the pixellated detector on which the sub-block is imaged. After the required data has been read the central data block is re-positioned in the field of the read objective.

For recording data in the optical card, the following additional steps are performed. The sub-block to be recorded is positioned in the field of the entrance objective lens by means of the electromechanical positioning device. Then the center and the servo cross of the respective block is aligned with the center and the orientation of the radiation sensitive detector, respectively. Next data bits are recorded along a scan line and the card is shifted, either in steps or continuously, in a direction perpendicular to the scan line. After required data has been recorded they are checked by means of the reading branch. Finally the central block is re-positioned in the field of the entrance objective lens and the address and content of the sub-block just recorded is stored in the central block.

Each read and recording cycle starts from the central block where in case of reading the address of a data page and in case of recording the address of an empty page is retrieved. Also each read and recording cycle ends with the central block where in case of recording the addresses and content of a newly recorded page is stored. The amount of movement of the optical card is reduced to a minimum whilst the optical read and recording device is stationary.

The new system also allows to record, and afterwards read an amount of data over two sub-blocks or over one than more block, which means that scan line (136) (Fig. 12) extends over more sub-blocks or more blocks.

## Claims

1. A system for reading and recording personal data and composed of a personalized optical card for each participant and a number of optical read and recording apparatuses at selected sites, **characterized by** the combination of the following features;
- data is arranged in rectangular blocks on the optical card;
- each data block includes a cross of optically detectable servo tracks;
- data in a block is read out in parallel;
- a read and recording apparatus is provided with a first mechanical actuator for moving a card block to be read or recorded in a read out position with respect to an optical read and recording device of the apparatus;
- the optical read and recording device comprises a servo track detection system for measuring card movements;
- data is recorded bit by bit by means of a linearly moving and intensity switchable recording spot and a second mechanical actuator for moving the card over distances of the order of a data bit size in a direction perpendicular to the recording spot movement.

2. A system as claimed in claim 1 **characterized in that** it is configured to have a home position in the form of a central data block in the optical card, which block constitutes the start position and end position for each read cycle and each recording cycle.

3. An optical card for use in the system of claims 1 or 2 and for carrying personal data, which card has a length direction and a width direction and an information layer that is divided in recording portions, **characterized in that** the recording portions are blocks spaced from each other in the length direction and width direction of the card, which blocks are sub-divided in a number of sub-blocks, which are simultaneously accessible and **in that** a central block in the center of the card is a navigation block that comprises information about addresses of the other blocks and about contents of other blocks that are already recorded with user data.

4. An optical card as claimed in claim 3, **characterized in that** the navigation block is provided with user identification data.

5. An optical card as claimed in claim 3 or 4, **characterized in that** between the sub-blocks within a block optically detectable servo tracks are arranged.

6. An optical card as claimed in claim 3, 4, or 5, **characterized in that** the information layer is covered with a transparent protective layer.

7. An apparatus for use in the system of claims 1 or 2 and comprising a card holder and an optical read and recording device, **characterized in that** the apparatus comprises a mechanical actuator for moving the card holder in two, mutually perpendicular, directions to position a data block in the field of an entrance objective lens of the optical read and recording device and to align the center of the data block with the optical axis of the entrance objective lens.

8. An apparatus as claimed in claim 7, **characterized in that** the mechanical actuator is configured to displace the optical card during recording over small distances in one of the two card directions.

9. An apparatus as claimed in claim 7 or 8, **characterized in that** its optical read and recording device comprises three branches having a common optical axis and a common entrance objective lens facing the optical card, the branches including:
- a reading branch for reading data,
- a servo branch for determining alignment of a data block of the card with the common optical axis and of focus of the entrance objective lens relative to the card information layer, and
- a recording branch for recording data.

10. An apparatus as claimed in claim 9, **characterized in that** the reading branch includes an objective lens in addition to and identical to the entrance objective lens, a read radiation source delivering a read beam and a pixellated radiation-sensitive detector.

11. An apparatus as claimed in claim 9 or 10, **characterized in that** the servo branch includes a radiation source delivering a servo beam and a two-dimensional grating structure to generate a number of alignment spots on mutually perpendicular servo tracks within a data block.

12. An apparatus as claimed in claim 9, 10 or 11, **characterized in that** the servo branch includes an astigmatic focus detection system.

13. An apparatus as claimed in claims 9, 10, 11 or 12, **characterized in that** the recording branch includes a laser source delivering a recording laser beam which power is switchable at data recording rate and a rotatable reflector to scan the recording beam in one direction over the optical card.

14. A method for manipulating an optical card such that it is ready for reading or recording in the apparatus as claimed in any of claims 7-13 and comprising the steps of:
- arranging the card in a cardholder of the apparatus;
- directing a beam of optical radiation at the card;
- capturing optical radiation from the card on a radiation-sensitive detector;
**characterized by** the steps of:
- activating the reading branch and the servo branch;
- positioning the central block of the card in the field of the entrance objective lens of the read and recording device by means of cardholder movement;
- aligning the center and the central cross of the central block with the center and the orientation of the radiation sensitive detector, respectively;
- determining the coordinates of the sub-block to be read or recorded, and
- positioning the block containing this sub-block in the field of the entrance objective lens by means of card holder movement

15. A method of reading data from an optical card, comprising the initial steps of claim 14, **characterized by** the additional steps of:
- aligning the center and the central cross of the block containing the sub-block to be read with the center and orientation of the radiation sensitive detector, respectively;
- reading data of the sub-block by illuminating the sub-block and interrogating the portion of the detector on which the sub-block is imaged, and
- re-positioning the central block back in the field of the read objective after the required data has been read.

16. A method of recording data in an optical card, comprising the initial steps of claim 14, **characterized by** the additional steps of:
- positioning the sub-block to be recorded in the field of the entrance objective lens;
- aligning the center and the central cross of the respective block with the center and the orientation of the radiation sensitive detector;
- recording data bits along a scan line and shift the card, either in steps or continuously, in a direction perpendicular to the scan line,
- checking, by means of the reading branch, the recorded data after they have been recorded, and
- repositioning the central block in the field of the entrance objective lens and storing the address and content of the sub-block just recorded in the central block.
